# EUROPÄISCHE PATENTSCHRIFT

(11) **EP 0 351 527 B1**
(45) Veröffentlichungstag und Bekanntmachung des Hinweises auf die Patenterteilung: **01.09.1993**
(21) Anmeldenummer: 89109994.7
(22) Anmeldetag: 02.06.1989
(51) Int. Cl.: B60S 1/34

(54) **Wischvorrichtung für Scheiben von Kraftfahrzeugen**
Motor vehicle window wiping arrangement
Installation d'essuyage pour vitres de véhicules automobiles

(30) Priorität: 20.07.1988 DE 3824483
(43) Veröffentlichungstag der Anmeldung: 24.01.1990
(73) Patentinhaber: ROBERT BOSCH GMBH, 70442 Stuttgart (DE)
(72) Erfinder: Kühbauch, Gerd, Dipl.-Ing. (FH), D-7582 Bühlertal (DE)

(56) Entgegenhaltungen:
- US-A- 3 887 956

## Beschreibung

Die Erfindung geht aus von einer Wischvorrichtung für Scheiben von Kraftfahrzeugen nach der Gattung des Hauptanspruchs.

### Stand der Technik

Es ist schon eine solche Wischvorrichtung bekannt (FR-PS 84 402, Zusatz zum FR-Patent 13 07 974) bei der in der als Hohlwelle ausgebildeten Wischerwelle ein Rohr gehalten ist, das mit seinen Enden beidseitig aus der Hohlwelle ragt. Diese Enden bilden Anschlußstutzen für eine flexible Schlauchleitung, die aber insbesondere im Übergangsbereich von der karosseriefesten Halterung zum pendelnd bewegbaren Anschlußstutzen an der Wischerwelle eine großzügig bemessene Schlauchschleife aufweisen muß, damit die Pendelbewegung ausgeglichen werden kann. Die bekannte Anordnung ist platzaufwendig, störungsanfällig und teuer.

### Vorteile der Erfindung

Die erfindungsgemäße Wischvorrichtung mit den Merkmalen des Hauptanspruchs hat demgegenüber den Vorteil, daß der Bewegungsausgleich in der Waschflüssigkeitszufuhr zwischen Karosserie und Wischerwelle innerhalb der rohrförmigen Wischerwelle erfolgt, wo äußere Einflüsse nicht einwirken können.

Durch die in den Unteransprüche aufgeführten Maßnahmen sind vorteilhafte Weiterbildungen und Verbesserungen der im Hauptanspruch angegebenen Wischvorrichtung möglich.

### Zeichnung

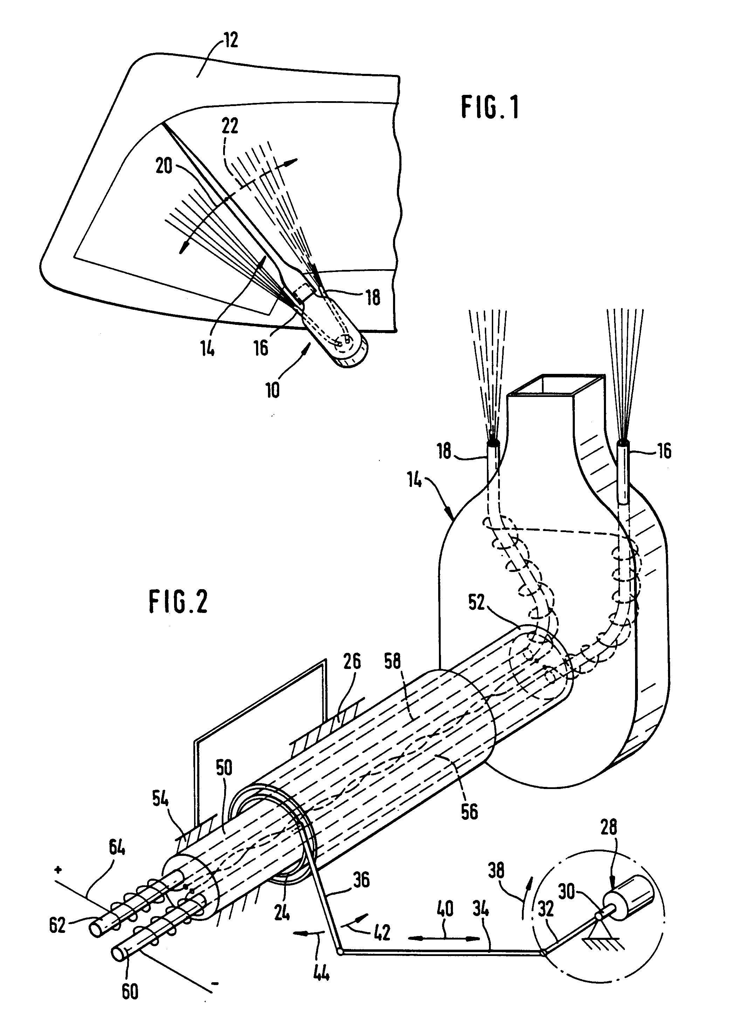

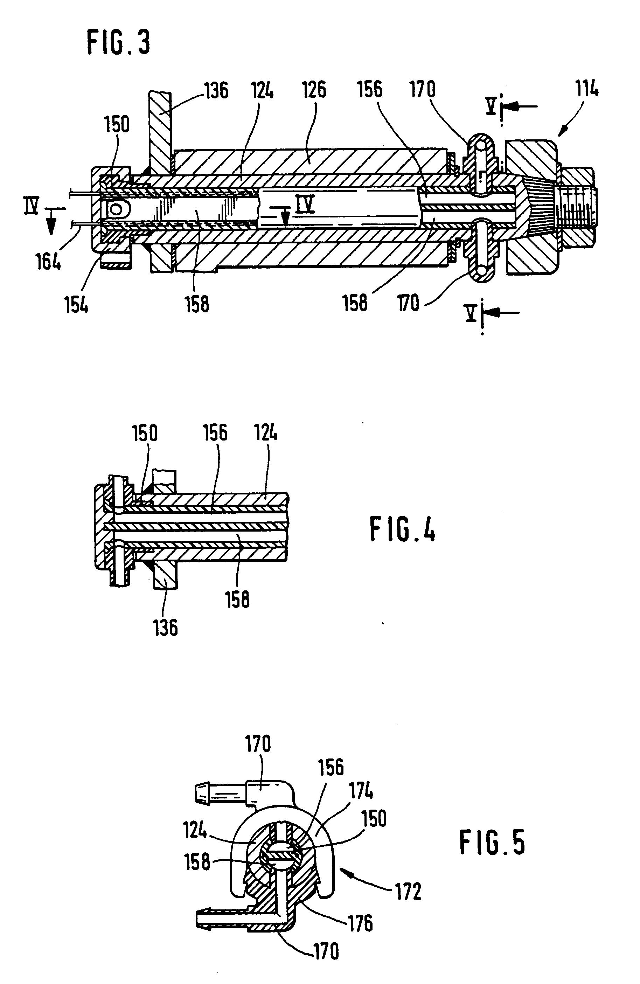

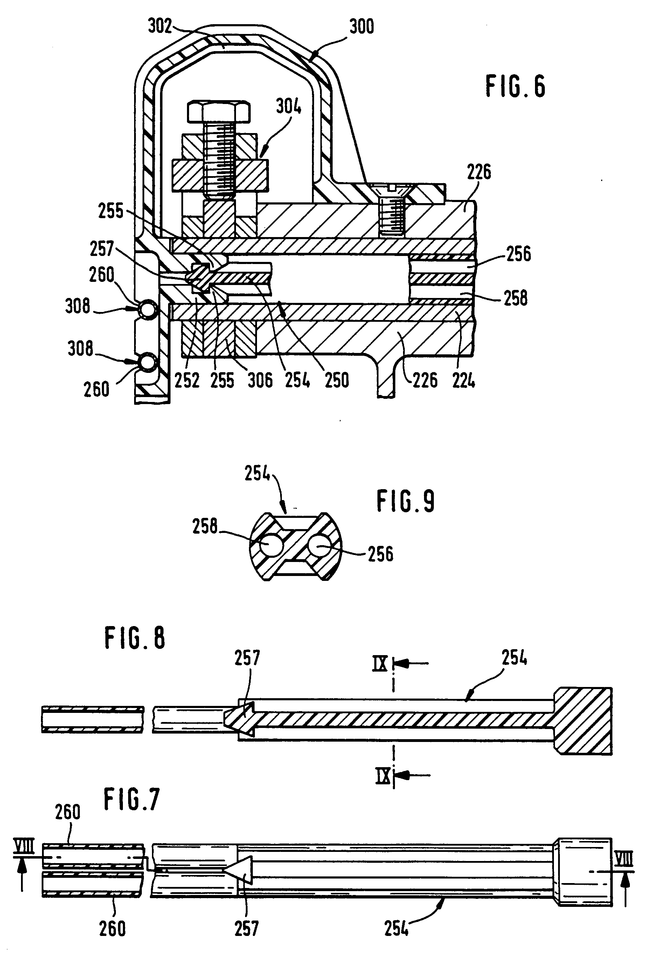

Ausführungsbeispiele der Erfindung sind in der Zeichnung dargestellt und in der nachfolgenden Beschreibung näher erläutert. Es zeigen Figur 1 eine Prinzipskizze einer Wischvorrichtung für die Windschutzscheibe eines Kraftfahrzeuges, an deren Wischhebel Spritzdüsen für Waschflüssigkeit angeordnet sind, Figur 2 eine Durchführung der Waschflüssigkeitszufuhr durch die Wischerwelle, in vergrößerter, isometrischer Darstellung, gemäß einer ersten Ausführungsform der Erfindung, Figur 3 einen Längsschnitt durch ein Wischerwellenlager gemäß einer anderen Ausführungsform der Erfindung, Figur 4 einen Schnitt entlang der Linie IV-IV in Figur 3, Figur 5 einen Schnitt entlang der Linie V-V in Figur 3, Figur 6 einen Längsschnitt durch ein Wischerwellenlager gemäß einer weiteren Ausführungsform der Erfindung, Figur 7 eine zu dem Bauelement gemäß der Ausführung nach Figur 6 gehörendes Teilstück, verkleinert dargestellt, teilweise geschnitten, Figur 8 einen Längsschnitt durch das Teilstück nach Figur 7 und Figur 9 einen Schnitt entlang der Linie IX-IX in Figur 8.

### Beschreibung der Ausführungsbeispiele

Eine in Figur 1 dargestellte Wischanlage 10 für die Windschutzscheibe 12 eines nicht näher dargestellten Kraftfahrzeuges weist einen Wischhebel 14 auf, der durch einen üblichen Wischerarm und ein allgemein bekanntes Wischblatt gebildet ist. An dem Wischhebel 14 sind zwei Spritzdüsen 16 und 18 angeordnet, welche Waschflüssigkeit auf die Scheibe 12 aufbringen. Die Spritzdüsen 16 und 18 arbeiten im Gegentakt derart, je nach Pendelrichtung (Pfeile 20 und 22) des Wischhebels 14 stets die vor dem Wischhebel liegenden Scheibenbereiche genetzt werden.

In Figur 2 ist lediglich der Teil des Wischhebels 14 dargestellt, der mit einer als Hohlwelle ausgebiedeten rohrförmigen Wischerwelle 24 verbunden ist. Die Verbindung zwischen der rohrförmigen Wischerwelle 24 und dem Wischhebel 14 ist in Figur 2 der besseren Übersichtlichkeit wegen nicht dargestellt. Man muß aber davon ausgehen, daß die rohrförmige Wischerwelle 24 fest mit dem Wischhebel 14 verbunden ist. Die Wischerwelle 24 selbst ist in einem bei 26 angedeuteten Pendellager gestellfest geführt. Der Antrieb der Wischerwelle erfolgt von einem Antriebsaggregat 28 mit einer umlaufenden Abtriebswelle 30, die mit einer Kurbel 32 fest verbunden ist. An dem freien Ende der Kurbel 32 ist ein Ende einer Schubstange 34 angelenkt, deren anderes Ende gelenkig mit einer Schwinge 36 verbunden ist, die ihrerseits an der rohrförmigen Wischerwelle 24 befestigt ist. Wenn die Kurbel 32 nun in Richtung des Pfeiles 38 umläuft, führt die Schubstange 34 eine im wesentlichen hin- und hergehende Bewegung (Doppelpfeil 40) aus und überträgt diese Bewegung auf die Schwinge 36, welche eine durch die Pfeile 42 und 44 angedeutete Pendelbewegung macht. Die Pendelbewegung 42, 44 entspricht der Pendelbewegung 20, 22 des Wischhebels 14. Die Längsbohrung der rohrförmigen Wischerwelle 24 ist von einem Bauelement 50 durchsetzt, dessen eines Ende 52 fest mit dem Wischhebel 14 verbunden ist. Das andere Ende des Bauelements 50 ist, wie bei 54 angedeutet, gestellfest gehalten. Das Bauelement 50 ist beim Ausführungsbeispiel gemäß Figur 2 stangenartig ausgebildet, wobei es aber in der Bohrung der rohrförmigen Wischerwelle 24 Radialspiel aufweist. Dieser sich so ergebende Ringspalt kann beispielsweise mit einem Schmiermittel gefüllt sein. Wie Figur 2 weiter zeigt, weist das Bauelement 50 zwei Längsbohrungen 56 und 58 auf, deren eine Enden leitend mit den Spritzdüsen 16 und 18 verbunden sind. Die anderen Enden der Längsbohrungen 56 und 58 sind an gestellfesten Leitungen 60 und 62 angeschlossen, welche der Flüssigkeitszufuhr dienen. Damit das Bauelement 50 zwischen seinen beiden Enden 54 und 52 die Pendelbewegung des Wischhebels 14 ausgleichen kann, ist das Bauelement 50 wenigstens partiell aus einem nachgiebigen, vorzugsweise elastischen Werkstoff hergestellt. Dadurch ist es möglich, daß das Bauelement 50 einendig bei 54 gestellfest gehalten sein kann und andererseits aber seinem Ende 52 mit dem eine Pendelbewegung ausführenden Wischhebel 14 verbunden sein kann. Der Bewegungsausgleich im Bauelement 50 zwischen der gestellfesten Halterung 54 und dem Wischhebel 14 erfolgt somit innerhalb der rohrförmigen Wischerwelle 24. Weiter ergibt sich aus Figur 2, daß das Ende 52 des Bauelements 50 im Bereich der nicht dargestellten, in bezug auf die Strömungsrichtung der Waschflüssigkeit stromabliegenden Mündung der Wellenbohrung mit einem pendelnden Bauteil - beispielsweise der Wischerwelle 24 und dem Wischhebel 14 verbunden ist. Das andere, stromauf liegende Ende des Bauelements ist nahe der stromaufliegenden Mündung der Bohrung der rohrförmigen Wischerwelle 24 bei 54 gestellfest gehalten. Schließlich zeigt Figur 2 weiter, daß das Bauelement 50 auch von einem Heizelement 64 durchsetzt sein kann, das sich nahe der Längsbohrungen 56, 58 des Bauelements 50 befinden. Das Heizelement 64 kann weiter sich bis in den Wischhebel 14 erstrecken und auch die Düsen 16 und 18 beheizen.

Eine andere Ausführungsform der Erfindung ist den Figuren 3 bis 5 dargestellt. Insbesondere Figur 3 zeigt die rohrförmige Wischerwelle 124, welche im gestellfesten Wischerlager 126 geführt ist. Weiter zeigt Figur 3 die mit der Wischerwelle 124 fest verbundene Schwinge 136. Weiter ist erkennbar, daß das Bauelement 150 über nicht näher dargestellte Haltemittel 154 einendig gestellfest gehalten ist. Das andere Ende des Bauelements 150 an der Wischerwelle 124 verankert. Dies wird vom Ausführungsbeispiel gemäß Figur 3 dadurch erreicht, daß nahe dem Wischhebel 114 die rohrförmige Wischerwelle 124 von zwei in radialer Richtung angeordneten Rohrstutzen 170 durchdrungen ist, welche mit den beiden Längsbohrungen 156, 158 leitend verbunden sind. Die besondere Anordnung der Rohrstutzen ist aus Figur 5 entnehmbar. Figur 5 zeigt, daß jeder Rohrstutzen 170 an einer Hälfte eines zweiteiligen, rohrförmige Wischerwelle 124 umfangenden Bauteils 172 angeordnet ist, dessen beiden Teile 174, 176 miteinander verrastet sind. An den beiden Rohrstutzen 170 sind in an sich bekannter Weise Leitungen anschließbar, welche zu den Spritzdüsen führen. Die Zuleitung der Waschflüssigkeit zum Bauelement 150 zeigt besonders Figur 4. Aus Figur 3 ist weiter ersichtlich, daß auch bei dieser Ausführungsform ein Heizelement 164 in das Bauelement 150 hinein und durch dieses hindurchgeführt ist. Der einfacheren Darstellung wegen, ist das Bauelement 150 in seinem Mittelbereich abgebrochen worden. Der Betrachter soll sich also die Situation so vorstellen, daß die bei der Pendelbewegung des Wischhebels 124 zwangsläufig erfolgende Verwindung des Bauelements 150 gerade in diesem nicht dargestellten Mittelbereich erfolgt, so daß zwar in der rechten Hälfte des Bauelements das mit dem Wischhebel 114 verbunden ist, beide Längsbohrungen 156, 158 im Schnitt erscheinen, während der gestellfest gehaltene Bereich des Bauelements 150 lediglich noch die Längsbohrung 158 zeigt.

Eine weitere Ausführungsform der Erfindung zeigen die Figuren 6 bis 9. Bei dieser Ausführungsform wird das Bauelement 250 zweiteilig ausgeführt. Es befindet sich ebenfalls innerhalb der rohrförmigen Wischerwelle 224, die im gestellfesten Wischerlager 226 geführt ist. Die beiden Teile 252 und 254 sind aus Figur 6 erkennbar. Das eine Teil des Bauelements 250 ist an einem Bügel 300 angeordnet, der fest mit dem gestellfesten Wischerlager 226 verbunden ist. Der Bügel 300 übergreift mit einer Ausbauchung 302 eine Befestigungsanordnung 304 für die Schwinge 306. Der Bügel 300 greift nun mit einem zapfenartigen Ansatz in die Bohrung der Wischerwelle 224 und bildet somit das eine Teil 252 des Bauelements 250. Weiter sind an den Bügel 300 noch Halterungen 308 für Zufuhrschläuche für die Förderleitung der Waschflüssigkeit angeformt. Der Bügel 300 ist mitsamt dem Bauelemententeil 252 aus einem relativ steifen Material gefertigt. Das Bauelemententeil 252 ist an seinem Endabschnitt mit Rastmitteln 255 ausgestattet, die mit Gegenrastmitteln 257 des anderen Bauelemententeils 254 zusammenarbeiten. Das andere Bauelemententeil ist besonders aus den Figuren 7 bis 9 erkennbar. Es ist aus einen nachgiebigeren Material gefertigt als das Bauelemententeil 252. Weiter weist es ebenfalls zwei Längsbohrungen 256, 258 auf, welche nahe dem Bereich von Gegenrastmitteln 257 in flexible Schläuche 260 übergehen, welche in den Halterungen 308 des Bügels 300 verankerbar sind. Bei dieser Ausführungsform ist die Anordnung so getroffen, daß also das steifere Bauelemententeil 252 über den Bügel 300 gestellfest gehalten ist, während das aus einem nachgiebigeren Material bestehende Bauelemententeil 254 mit dem Wischhebel bzw. mit der rohrförmigen Wischerwelle 224 fest verbunden ist. Der Ausgleich der Pendelbewegung erfolgt somit ebenfalls innerhalb der rohrförmigen Wischerwelle 224. Natürlich ist es denkbar, daß bei dem Stand der heutigen Spritztechnik das Bauelement 252, 254 auch im sogenannten Zweistoff-Spritzverfahren herzustellen ist, bei dem sich ein einstückiges Bauelement ergibt, das aber partiell aus einem steiferen Material hergestellt ist und weiter auch zumindest einen Abschnitt aufweisen kann, der aus einem erheblich nachgiebigeren Material besteht.

## Patentansprüche

1. Wischvorrichtung für Scheiben von Kraftfahrzeugen, mit einem auf einer Hohlwelle (rohrförmige Wischerwelle 24, 124, 224) sitzenden, über diese pendelnd bewegbaren Wischhebel (14), der mit wenigstens einer auf die zu wischenden Scheibe (Windschutzscheibe 12) gerichteten Spritzdüse (16, 18) für Reinigungsflüssigkeit versehen ist und die Flüssigkeitszufuhr zur Spritzdüse (16, 18) durch ein in der Wellenbohrung die Hohlwelle (24, 124, 224) durchsetzendes Bauelement (50, 150, 250 erfolgt, dessen einer, stromabliegender Endabschnitt (52) mit der Hohlwelle (24, 124, 224) oder dem Wischhebel (14) drehfest verbunden ist, dadurch gekennzeichnet, daß der andere stromaufliegende Endabschnitt des Bauelements (50, 150, 250) nahe der stromaufliegenden Mündung der Wellenbohrung gestellfest gehalten ist und daß das Bauelement (50, 150, 250) wenigstens partiell aus einem nachgiebigen, elastischen Werkstoff hergestellt ist, derart, daß der Bewegungsausgleich im Bauelement (50, 150, 250) zwischen der gestellfesten Halterung (54, 154, 254) und dem Wischhebel (14) innerhalb der Hohlwelle (24, 124, 224) erfolgt.

2. Wischvorrichtung nach Anspruch 1, dadurch gekennzeichnet, daß ein den gestellfest gehaltenen Endabschnitt aufweisender Bereich des Bauelements (50) bis zur drehfesten Verankerung an der Hohlwelle (24) gegenüber der Wellenbohrung Spiel aufweist.

3. Wischvorrichtung nach einem der Ansprüche 1 oder 2, dadurch gekennzeichnet, daß das Bauelement (50) wenigstens zwei Kanäle (56, 58) für die Waschflüssigkeit hat und daß jeder der Kanäle zu einer ihm zugeordneten Spritzdüse (16, 18) führt.

4. Wischvorrichtung nach einem der Ansprüche 1 bis 3, dadurch gekennzeichnet, daß das Bauelement (250) zweiteilig ist, wobei der eine, aus dem nachgiebigen Material bestehende Teil (254) mit der Hohlwelle (224) drehfest verbunden ist, der andere, aus einem steiferen Material bestehende Teil (252) gestellfest gehalten ist und daß die beiden Bauelemententeile (252, 254) vorzugsweise innerhalb der Hohlwelle (224) miteinander verbunden sind.

5. Wischvorrichtung nach Anspruch 4, dadurch gekennzeichnet, daß der eine Bauelemententeil (252) Rastmittel (257) aufweist, welche mit Gegenrastmitteln (255) des anderen Bauelemententeils (252) zusammenarbeiten.

6. Wischvorrichtung nach einem der Ansprüche 4 oder 5, dadurch gekennzeichnet, daß das eine, aus dem nachgiebigeren Material bestehende Teil nahe dem Wischhebel (114) wenigstens mit einem, die Hohlwelle (124) in radialer Richtung durchdringenden Rohrstutzen (170) verbunden ist, der an die Flüssigkeitsführung (156, 158) im Bauelement (150) angeschlossen ist.

7. Wischvorrichtung nach Anspruch 6, dadurch gekennzeichnet, daß der Rohrstutzen (170) an einem zweiteiligen, die Hohlwelle (124) umfassenden Bauteil (172) angeordnet ist, dessen beide Teile (174, 176) miteinander verbindbar, vorzugsweise verrastbar sind.

8. Wischvorrichtung nach einem der Ansprüche 4 bis 7, dadurch gekennzeichnet, daß das andere, aus einem steiferen Material bestehende Teil (252) mit Haltemitteln (308) für die an dem Bauelement anschließbare Förderleitung (260) versehen ist.

9. Wischvorrichtung nach einem der Ansprüche 1 bis 8, dadurch gekennzeichnet, daß das Bauelement (50) beheizbar ist.

## Claims

1. Wiping device for screens of motor vehicles, having a wiper lever (14), which is seated on a hollow shaft (tubular wiper shaft 24, 124, 224) and can be moved pendulously by means thereof and which is provided with at least one spray nozzle (16, 18) for cleaning liquid, which spray nozzle is directed onto the screen (windscreen 12) to be wiped, and the liquid being fed to the spray nozzle (16, 18) by a structural element (50, 150, 250) passing, in the shaft bore, through the hollow shaft (24, 124, 224), a downstream-lying end section (52) of the said structural element being connected, in a rotationally secure manner, to the hollow shaft (24, 124, 224) or to the wiper lever (14), characterised in that the other, upstream-lying end section of the structural element (50, 150, 250) is held fixed to the chassis close to the upstream-lying mouth of the shaft bore and in that the structural element (50, 150, 250) is made at least partially out of a ductile, elastic material, such that the motional equalisation in the structural element (50, 150, 250) between the chassis-fixed mounting (54, 154, 254) and the wiper lever (14) is effected within the hollow shaft (24, 124, 224).

2. Wiping device according to Claim 1, characterised in that an area of the structural element (50) exhibiting the end section which is held fixed to the chassis exhibits play, in relation to the shaft bore, up to the rotationally secure anchorage to the hollow shaft (24).

3. Wiping device according to one of Claims 1 or 2, characterised in that the structural element (50) exhibits at least two ducts (56, 58) for the washing liquid and in that each of the ducts leads to a spray nozzle (16, 18) assigned thereto.

4. Wiping device according to one of Claims 1 to 3, characterised in that the structural element (250) is in two parts, the one part (254) consisting of the ductile material being connected, in a rotationally secure manner, to the hollow shaft (224), the other part (252), consisting of a stiffer material, being held fixed to the chassis, and in that the two structural element parts (252, 254) are interconnected, preferably within the hollow shaft (224).

5. Wiping device according to Claim 4, characterised in that the one structural element part (252) exhibits latching means (257) which interact with counter-latching means (255) of the other structural element part (252).

6. Wiping device according to one of Claims 4 or 5, characterised in that the one part consisting of the more ductile material is connected close to the wiper lever (114) to at least one pipe socket (170) penetrating the hollow shaft (124) in the radial direction, which pipe socket is connected to the liquid guide (156, 158) in the structural element (150).

7. Wiping device according to Claim 6, characterised in that the pipe socket (170) is disposed on a two-part structural part (172), which embraces the hollow shaft (124) and the two parts (174, 176) of which can be interconnected and, preferably, latched into place.

8. Wiping device according to one of Claims 4 to 7, characterised in that the other part (252) consisting of a stiffer material is provided with holding means (308) for the conveyor duct (260) connectable to the structural element.

9. Wiping device according to one of Claims 1 to 8, characterised in that the structural element (50) is heatable.

## Revendications

1. Dispositif pour essuyer les vitres de véhicules à moteur, avec un bras d'essuie-glace (14) monté sur un arbre creux, constituant l'arbre de l'essuie-glace de forme tubulaire (24, 124, 224), pouvant se mouvoir sur celui-ci de façon pendulaire, qui est pourvu d'au moins une buse d'aspersion (16, 18), orientée vers la vitre à essuyer (pare-brise 12) pour le liquide de nettoiement et dans lequel l'amenée du liquide à la buse d'aspersion (16, 18) a lieu à travers un élément de construction (50, 150, 250) passant à travers l'arbre creux (24, 124, 224) dans l'alésage de l'arbre, élément dont une section terminale, située en aval, (52) est reliée solidairement à l'arbre creux (24, 124, 224) ou au bras de l'essuie-glace (14), dispositif caractérisé en ce que l'autre section terminale, située en amont, de l'élément de construction (50, 150, 250) est immobilisée, de façon solidaire avec le châssis, à proximité de l'embouchure située en amont de l'alésage de l'arbre et en ce que l'élément de construction (50, 150, 250) est fabriqué au moins partiellement en une matière flexible, élastique, de telle sorte que la compensation du mouvement entre la fixation, solidaire du châssis (54, 154, 254) et le bras de l'essuie-glace (14), pour l'élément de construction (50, 150, 250) ait lieu à l'intérieur de l'arbre creux (24, 124, 224).

2. Dispositif d'essuyage selon la revendication 1, caractérisé en ce qu'une zone de l'élément de construction (50) présentant la section terminale immobilisée de façon solidaire du châssis présente du jeu par rapport à l'alésage de l'arbre jusqu'au blocage en rotation sur l'arbre creux (24).

3. Dispositif d'essuyage selon l'une des revendications 1 ou 2, caractérisé en ce que l'élément de construction (50) a au moins deux canaux (56, 58) pour le liquide de lavage et en ce que chacun des canaux mène à une buse d'aspersion (16, 18) qui lui est associée.

4. Dispositif d'essuyage selon l'une des revendications 1 à 3, caractérisé en ce que l'élément de construction (250) est en deux parties, l'une des parties (254), réalisée en une matière flexible, étant reliée de façon solidaire en rotation à l'arbre creux (224), l'autre partie (252) réalisée en une matière plus rigide étant immobilisée de façon solidaire du châssis et en ce que les deux parties (252, 254) de l'élément de construction sont reliées de préférence l'une à l'autre à l'intérieur de l'arbre creux (224).

5. Dispositif d'essuyage selon la revendication 4, caractérisé en ce que l'une des parties (252) de l'élément de construction présente des moyens d'encliquetage (257) qui coopèrent avec des contre-moyens d'encliquetage (255) de l'autre partie (252) de l'élément de construction.

6. Dispositif d'essuyage selon l'une des revendications 4 ou 5, caractérisé en ce que l'une des parties, celle réalisée en une matière plus flexible est reliée au voisinage du bras d'essuie-glace (114) au moins à un ajutage tubulaire (170), passant à travers l'arbre creux (124) dans le sens radial, ajutage qui est raccordé à la conduite de liquide (156, 158) dans l'élément de construction (150).

7. Dispositif d'essuyage selon la revendication 6, caractérisé en ce que l'ajutage tubulaire (170) est disposé sur un élément de construction en deux parties (172) entourant l'arbre creux (124), dont les deux parties (174, 176) peuvent être reliées l'une à l'autre, et peuvent être de préférence encliquetables.

8. Dispositif d'essuyage selon l'une des revendications 4 à 7, caractérisé en ce que l'autre partie, réalisée en une matière plus rigide (252) est pourvue de moyens de fixation (308) pour la conduite d'alimentation (260) pouvant être raccordée à l'élément de construction.

9. Dispositif d'essuyage selon l'une des revendications 1 à 8, caractérisé en ce que l'élément de construction (50) peut être chauffé.
